# EUROPÄISCHE PATENTSCHRIFT

(11) **EP 0 660 976 B1**
(45) Veröffentlichungstag und Bekanntmachung des Hinweises auf die Patenterteilung: **06.08.1997**
(21) Anmeldenummer: 93918870.2
(22) Anmeldetag: 14.09.1993
(51) Int. Cl.: H02M 3/335, H02M 1/08

(54) **RÜCKSPEISUNGSFESTER SYNCHRONGLEICHRICHTER**
SYNCHRONOUS RECTIFIER RESISTANT TO FEEDBACK
REDRESSEUR SYNCHRONE RESISTANT A LA RETROACTION

(30) Priorität: 14.07.1993 CH 2115/93
(43) Veröffentlichungstag der Anmeldung: 05.07.1995
(73) Patentinhaber: MELCHER AG, CH-8610 Uster (GB)
(72) Erfinder: DITTLI, René, CH-8635 Duernten (CH); ALLINGTON, Philip, CH-8610 Uster (CH)
(74) Vertreter: Salgo, Reinhold Caspar, Dr.
(86) Internationale Anmeldenummer: CH9300224
(87) Internationale Veröffentlichungsnummer: WO9502917

(56) Entgegenhaltungen:
- EP-A- 0 396 125
- WO-A-90/03688
- DE-A- 3 938 583
- US-A- 4 989 127
- US-A- 5 038 266

## Beschreibung

Die vorliegende Erfindung betrifft einen rückspeisungsfesten Synchron-Gleichrichter nach dem Oberbegriff des Patentanspruches 1 oder 2.

Speisegeräte mit Synchron-Gleichrichtern sind an sich bekannt und als Stromversorgungsgeräte im Einsatz. Ebenso sind solche Geräte aus Veröffentlichungen bekannt, so z.B. aus O. Kilgenstein, Schaltnetzteile in der Praxis, Würzburg 1992, oder aus dem Artikel 'Practical application of MOSFET synchronous rectifiers' (BLANC, 13TH INTERNATIONAL TELECOMMUNICATIONS ENERGY CONFERENCE INTELEC 91 (5 November 1991, KYOTO), Seiten 495 - 501). Jedes der bekannten Geräte hat einen Arbeitsbereich, der nach oben durch den maximalen Ausgangsstrom begrenzt ist, bei welchem die Ausgangsspannung noch auf den Sollwert geregelt wird.

Ist der Strombedarf zeitweise oder dauernd grösser, als die Leistungsfähigkeit eines einzelnen Gerätes und die Wahl eines solchen grösserer Leistung aus bestimmten Gründen nicht angezeigt, so werden solche Geräte parallel geschaltet. Entsteht in einem der so parallel geschalteten Geräte ein Betriebszustand, bei dem entweder die Ausgangsspannung absinkt, oder der Oszillator den Haupttransformator nicht mehr ansteuert bzw. unterbricht, so speisen die mit dem betrachteten Gerät parallelgeschalteten Geräte in das vorübergehend o der dauernd ausser Betrieb geratene Gerät zurück, was in aller Regel zu Zerstörung der gesteuerten Gleichrichter oder zum Zusammenbruch der Ausgangsspannung führt.

Die Aufgabe der vorliegenden Erfindung ist es, einen Synchron-Gleichrichter zu schaffen, der rückspeisungsfest ist und der in allen Betriebszuständen voll betriebstüchtig ist.

Die Lösung der gestellten Aufgabe ist wiedergegeben in den kennzeichnenden Teilen der Patentansprüche 1 und 2 sowohl hinsichtlich der Hauptmerkmale der Erfindung als auch hinsichtlich besonderer Ausführungsformen.

Anhand der beigefügten Zeichnung wird die Erfindung durch mehrerer Ausführungsbeispiele näher erläutert. Es zeigen:
Fig. 1 eine Schaltung nach dem Stande der Technik,
Fig. 2 das Prinzipschaltbild der erfindungsgemässen Lösung,
Fig. 3 ein erstes Ausführungsbeispiel nach Fig. 2,
Fig. 4 ein zweites Ausführungsbeispiel nach Fig. 2.

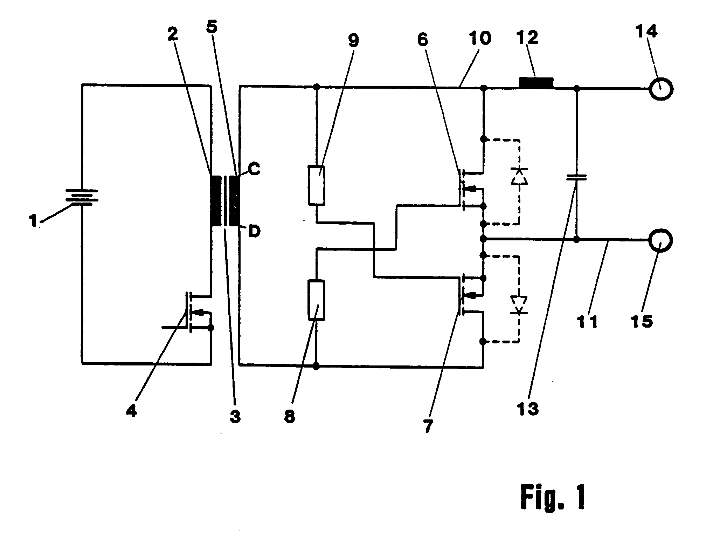

In Fig. 1 ist der Stand der Technik dargestellt, von welchem ausgegangen wird. Eine Gleichspannungs-Stromquelle 1 speist die mit 2 bezeichnete Primärwicklung eines Transformators 3. Der die Primärwicklung 2 speisende Strom wird periodisch unterbrochen durch einen elektronischen Schalter 4, wodurch in einer Sekundärwicklung 5 des Transformators 3 ein - annähernder - Rechteckpuls von Strom und Spannung entsteht. Zwei MOSFETs 6, 7, deren Gates über zwei Widerstände 8, 9 angesteuert werden, sind als gesteuerte Gleichrichter eingesetzt und speisen im Takt des Schalters 4 zwei Leitungen 10, 11. Leitung 11 ist direkt mit einem - negativen - Ausgang 15 verbunden, während zwischen einem weiteren - positiven - Ausgang 14 und der Drain-Elektrode des MOSFETs 6 eine Speicherdrossel 12 geschaltet ist. Der Widerstand 8 ist mit einem Ende C, der Widerstand 9 mit einem Ende D der Sekundärwicklung 5 verbunden. Das Ende C der Sekundärwicklung 5, der Anschluss des Widerstandes 8, die Drain-Elektrode des MOSFETs 6 und der eine Anschluss der Speicherdrossel 12 bilden einen Knoten, während das Ende D der Sekundärwicklung 5, der Anschluss des Widerstandes 8, die Drain-Elektrode des MOSFETs 7 einen weiteren Knoten bilden. Die Source-Elektroden der beiden MOSFETs 6, 7 sind auf die Leitung 11 geschaltet. Zwischen den Ausgängen 14, 15 befindet sich ein Kondensator 13 mit Glättungs- und Speicherfunktion.

Diese Schaltung bedingt eine zwischen den Ausgängen 14, 15 anliegende passive Last. Sind jedoch zwei oder mehrere solche nun beschriebene geschaltete Gleichrichter parallel geschaltet, so kann - beispielsweise bei kurzfristig ausfallender Schaltfunktion des Schalters 4 - Strom in die Schaltung zurückfliessen, was zu Kurzschluss über die nun leitenden MOSFETs 6, 7 und eventuell zu deren Zerstörung führt. Gestrichelt eingetragen sind ebenfalls die beiden sog. Substratdioden der MOSFETs 6, 7.

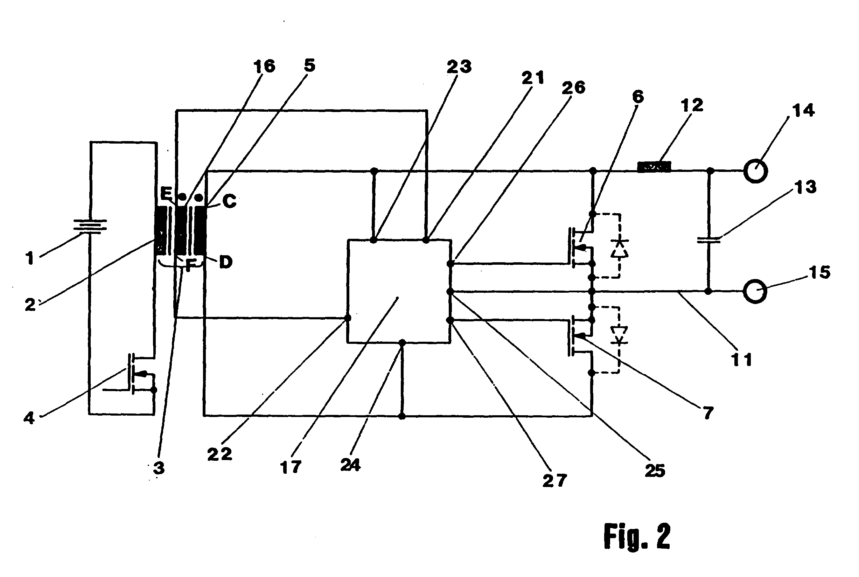

In Fig. 2 ist das Prinzip-Schaltbild der erfindungemässen Lösung dargestellt. Der Transformator 3 weist eine dritte Wicklung, die zweite Sekundärwicklung 16, auf, deren Polarität in bezug auf die erste Sekundärwicklung 5 so ist, dass das Ende C der ersten Sekundärwicklung 5 die gleiche Polarität aufweist, wie ein Ende E der zweiten Sekundärwicklung 16. Die Polarität eines Endes F der zweiten Sekundärwicklung 16 entspricht dann der Polarität des Endes D der ersten Sekundärwicklung 5. Die Schaltung gemäss Fig. 2 enthält ferner einen Steuerkreis 17, welcher erfindungsgemäss diejenigen Schaltelemente in jener Kombination enthält, welche die erfindungsgemässe Lösung ausmacht.

Der Schaltkreis 17 weist sieben Anschlüsse 21 bis 27 auf, über welche er sowohl mit der bekannten Schaltung gemäss Fig. 1, als auch mit der zweiten Sekundärwicklung 16 verbunden ist: Die Anschlüsse 21 und 22 stellen die Verbindung mit der zweiten Sekundärwicklung 16 bzw. deren Enden E, F her, die Anschlüsse 23, 24 jene mit der ersten Sekundärwicklung 5, bzw. deren Enden C, D. Die Anschlüsse 26, 27 steuern die Gate-Elektroden der MOSFETs 6, 7, während der Anschluss 24 mit der Drain-Elektrode des MOSFETs 7, und der Anschluss 25 mit der Leitung 11 verbunden ist, auf welche die Source-Elektroden der beiden MOSFETs 6, 7 geschaltet sind.

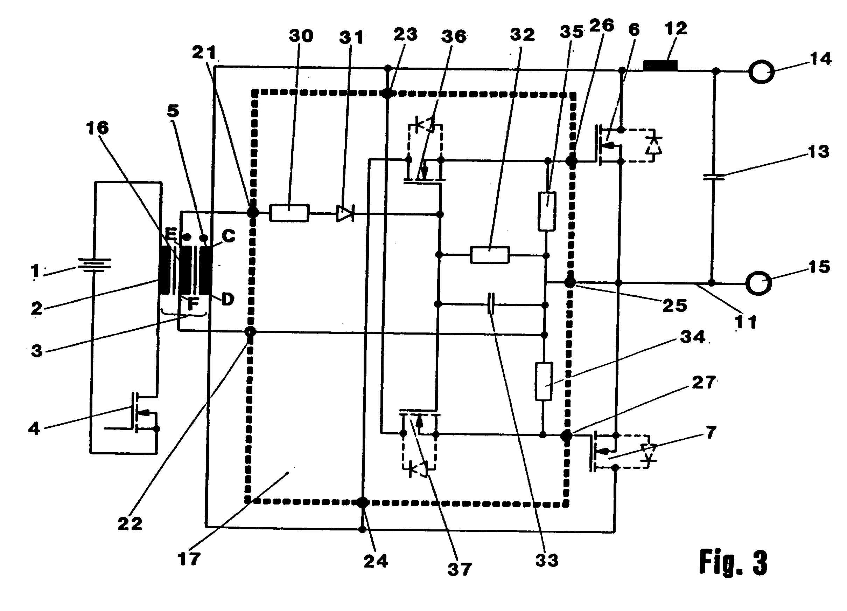

Fig. 3 enthält das Schaltbild einer ersten erfindungsgemässen Ausführungsform des Schaltkreises 17. Das Ende E der zweiten Sekundärwicklung 16 ist über einen Widerstand 30 mit einer Diode 31 verbunden, die anderseits mit den Gate-Elektroden zweier weiterer MOSFETs 36, 37 verbunden ist. Diese genannten Gate-Elektroden sind ferner über einen parallel zu einem Kondensator 33 geschalteten Widerstand 32 über den Anschluss 25 mit der Leitung 11 verbunden. Das Ende F der zweiten Sekundärwicklung 16 ist ebenfalls - innerhalb des Steuerkreises 17 - auf die Leitung 11 gelegt, welche ihrerseits über einen Widerstand 34 über den Anschluss 27 mit der Gate-Elektrode des MOSFETs 7, und über einen Widerstand 35, und Anschluss 26 mit der Gate-Elektrode des MOSFETs 6 verbunden ist. Die Drain-Elektrode des MOSFETs 36 ist über den Anschluss 24 mit dem Ende D der ersten Sekundärwicklung 5 und der Drain-Elektrode des MOSFETs 7 verbunden, die Drain-Elektrode des MOSFETs 37 über den Anschluss 23 mit dem Ende C der ersten Sekundärwicklung 5 und der Drain-Elektrode des MOSFETs 6.

Solange zwischen den Ausgängen 14 und 15 eine passive Last geschaltet ist, arbeitet der Steuerkreis gemäss Fig. 3 wirkungsmässig wie die bekannte Schaltung gemäss Fig. 1: Die Gate-Elektroden der MOSFETs 6, 7 können nur geladen werden, wenn der Kondensator 33 eine in bezug auf Leitung 11 positive Spannung aufweist, so dass die MOSFETs 36, 37 leitend sind. Dies wird bewirkt über die Ausgangsspannung U_{EF} der zweiten Sekundärwicklung 16, welche nur auftritt, wenn der Transformator 3 über den Schalter 4 getaktet wird. Ueber den Widerstand 30 fliesst, durch ihn begrenzt, ein Ladestrom für die Gate-Elektroden der MOSFETs 36, 37 und den Kondensator 33. Während der Polaritätsumkehr der Spannung U_{EF} verhindert die Diode 31 das Entladen der Gate-Kapazitäten und des Kondensators über die zweite Sekundärwicklung 16. Ferner hält der Kondensator 33 die Spannung der Gate-Elektroden der MOSFETs 36, 37 auf der notwendigen Höhe, wenn sich U_{DS} (die Spannung zwischen Drain und Source) der MOSFETs 36, 37 verändert.

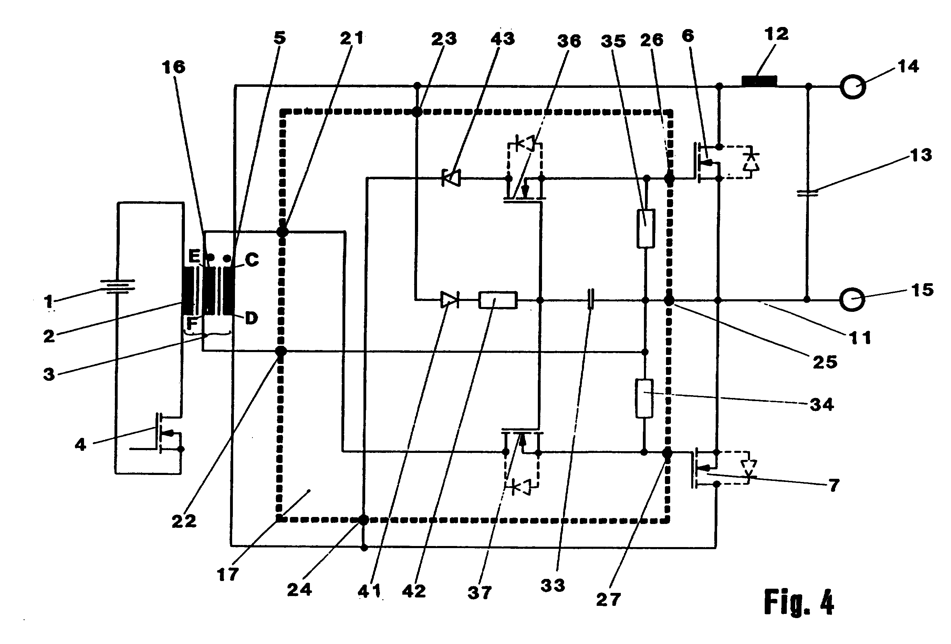

Fällt hingegen der Schalter 4 aus und bricht damit U_{EF} zusammen, so wird der Kondensator 33 über den Widerstand 32 entladen, die MOSFETs 36, 37 sperren, und die Gate-Elektroden der MOSFETs 6, 7 werden über die Widerstände 34, 35 entladen: Die MOSFETs 6, 7 sperren ebenfalls Erfindungswesentlich ist nun die Tatsache, dass die Substratdioden der MOSFETs 6, 7 die normale Gleichrichterfunktion aufrechterhalten, wenn auch, wegen ihrer grösseren Vorwärtsspannung, mit verschlechtertem Gesamtwirkungsgrade der Vorrichtung. Im zweiten Ausführungsbeispiel gemäss Fig. 4 sind die beiden MOSFETs 36, 37, welche die Gate-Elektroden der MOSFETs 6, 7 steuern, in bezug auf ihre Gate- und Drain-Elektroden anders beschaltet. Die beiden Gate-Elektroden der MOSFETs 6, 7 sind zusammen über den Kondensator 33 an den Anschluss 25 angeschlossen, welcher mit der Leitung 11 verbunden ist. Angesteuert werden die zusammengeschlossenen Gate-Elektroden über eine Diode 41 und einen dazu in Serie geschalteten Widerstand 42 vom Signal, welches am Ende C der ersten Sekundärwicklung 5 erzeugt wird. Dieses wird über den Anschluss 23 in die Steuerschaltung 17 eingespeist. Die Drain-Elektrode des MOSFET 36 ist über eine Zener-Diode 43 mit dem Anschluss 24, und dieser mit dem Ende D der ersten Sekundärwicklung 5 verbunden. Das Ende F der zweiten Sekundärwicklung 16 ist über die Anschlüsse 22 und 25 direkt mit der Leitung 11 verbunden, während das Ende E der zweiten Sekundärwicklung 16 - über den Anschluss 21 - die Drain-Elektrode des MOSFET 37 speist.

Oeffnet und schliesst der Schalter 4 mit der vorgesehenen Taktfrequenz, so ist die Wirkung des erfindungsgemässen Steuerkreises 17 erneut dieselbe, wie diejenige der bekannten Schaltung gemäss Fig. 1: Beim Schliessen des Schalters 4 entstehen über den Sekundärwicklungen 5 bzw. 16 gleichsinnige Spannungen U_{CD} bzw. U_{EF}. Der Kondensator 33 und die Gate-Elektroden der MOSFETs 36, 37 werden über die Diode 41 und den Widerstand 42 - welcher den Ladestrom begrenzt - aufgeladen; die MOSFETs 36, 37 werden bei der entsprechenden Drain-Sourcen-Spannung leitend. Bei Polaritätsänderung von U_{CD} verhindert die Diode 41 die Entladung des Kondensators über die erste Sekundärwicklung 6. Ferner stützt der Kondensator 33 die Ladung der Gate-Elektroden der MOSFETs 36, 37 bei sich ändernder Drain-Source-Spannung.

Fällt nun der Schalter 4 aus - indem er offen bleibt, so wirdsich bei aktiver Last zwischen den Ausgängen 14, 15 die von aussen anliegende Spannung zwar zurückgespeist; die Zenerdiode 43 reduziert diese Spannung aber so weit, dass die Schwellspannung zwischen Gate und Source des MOSFETs 6 unterschritten wird und der MOSFET 6 daher sperrt. Ferner wird auch die Sekundärwicklung 16 spannungslos und damit auch der MOSFET 7. Beide MOSFETs 6, 7 sperren, und es wirken, wie anhand der Fig. 3 beschrieben, nur noch die Substratdioden der MOSFETs 6, 7.

Sowohl beim Stand der Technik nach Fig. 1, als auch bei den Ausführungsbeispielen nach Fig. 3, 4 der erfindungsgemässen Lösung nach Fig. 2 sind sämtliche Vorrichtungsteile weggelassen, die die eigentliche Regelung der zwischen den Ausgängen 14, 15 anliegenden Spannung bewirken, da solche nach dem Stand der Technik einerseits als bekannt vorausgesetzt werden, anderseits auch von der erfindungsgemässen Steuerung 17 nicht betroffen sind.

## Patentansprüche

1. Synchrongleichrichter, bestehend aus einem Transformator (3) mit einer Primärwicklung (2), welche über einen von einem Oszillator gesteuerten Schalter (4) aus einer Gleichspannungsquelle (1) alternierend mit Strom versorgt wird, welcher Transformator (3) eine erste Sekundärwicklung (5) mit Enden (C, D) aufweist, ferner bestehend aus einem ersten MOSFET (6) und einem zweiten MOSFET (7), welche alternierend im Takte des Oszillators eingeschaltet werden, wobei der eine MOSFET (7) die Funktion einer Gleichrichterdiode, der zweite MOSFET (6) diejenige einer Freilaufdiode erfüllt, die Drain-Elektrode des ersten MOSFETs (6) einerseits mit dem einen Ende (C) der ersten Sekundärwicklung (5), anderseits über eine Speicherdrossel (12) mit einem Ausgang (14) der Vorrichtung verbunden ist, die Drain-Elektrode des zweiten MOSFETs (7) das andere Ende (D) der ersten Sekundärwicklung (5) speist, die Source-Elektroden beider MOSFETs (6, 7) mit einer Leitung (11) und über diese mit dem anderen Ausgang (15) der Vorrichtung verbunden sind, und die beiden Ausgänge (14, 15) der Vorrichtung durch einen Speicher- und Glättungskondensator (13) verbunden sind, dadurch gekennzeichnet, dass
- der Transformator (3) eine zweite Sekundärwicklung (16) mit Enden (E, F) aufweist, wobei das eine Ende (E) die gleiche Polarität aufweist, wie das eine Ende (C) der ersten Sekundärwicklung (5),
- eine Steuerung (17) vorhanden ist, welche sieben Anschlüsse (21 bis 27) aufweist, wobei der erste Anschluss (21) mit dem einen Ende (E), der zweite Anschluss (22) mit dem anderen Ende (F) der zweiten Sekundärwicklung (16), der dritte Anschluss (23) mit dem einen Ende (C), der vierte Anschluss (24) mit dem anderen Ende (D) der ersten Sekundärwicklung (5) verbunden sind, der fünfte Anschluss (25) an die Leitung (11), der sechste Anschluss (26) an die Gate-Elektrode des ersten MOSFETs (6), und der siebte Anschluss (27) an die Gate-Elektrode des zweiten MOSFETs (7) angeschlossen sind,
- die Steuerung (17) Mittel enthält zur Feststellung, ob über der ersten und der zweiten Sekundärwicklung (5, 16) eine Spannung induziert wird, und damit, ob der Synchrongleichrichter überhaupt arbeitet, ferner Mittel enthält, um im verneinenden Falle die beiden MOSFETs (6, 7) zu sperren, worauf diese ihre Diodenfunktion über ihre Substratdioden weiterhin vornehmen können,
- die in der Steuerung (17) enthaltenen Mittel zur Feststellung einer Induktionsspannung über der ersten und der zweiten Sekundärwicklung (5, 16) bestehend aus einem mit dem ersten Anschluss (21) verbundenen ersten Widerstande (30), welcher über eine Diode (31) und einen zweiten Widerstand (32) parallel zu einem Kondensator (33) am fünften Anschluss (25) angeschlossen ist, welcher auch mit dem zweiten Anschluss (22) verbunden ist, wobei die Spannung über dem Kondensator (33) die festzustellende Grösse ist,
- die Mittel um die beiden MOSFETs (6, 7) zu sperren, aus zwei MOSFET's (36,37) bestehen, weitern deren Gate-Elektroden mit dem Anschlusspunkt zwischen der Diode (31) und dem zweiten Widerstande (32) verbunden sind, die Drain-Elektrode des einen weiteren MOSFETs (36) mit dem vierten Anschluss (24), die Drain-Elektrode des anderen weiteren MOSFETs (37) mit dem dritten Anschluss (23) verbunden sind, die Source-Elektrode des einen weiteren MOSFETs (36) einerseits über einen dritten Widerstand (35) auf den fünften Anschluss (25), anderseits direkt auf den sechsten Anschluss (26) gelegt ist, die Source-Elektrode des zweiten weiteren MOSFETs (37) einerseits über einen vierten Widerstand (34) ebenfalls auf den fünften Anschluss (25), anderseits direkt auf den siebten Anschluss (27) gelegt ist,
- wobei bei vorhandener Induktionsspannung über der zweiten Sekundärwicklung (16) die Gate-Elektroden der zwei weiteren MOSFETs (36, 37) ständig soweit positiv sind, dass jeder der zwei weiteren MOSFETs (36, 37) bei richtiger Drain-Source-Spannung leitend ist und die zwei ersten MOSFETs (6, 7) im richtigen Takte arbeiten können, bei fehlender genannter Induktionsspannung der beiden zweiten MOSFETs (36, 37) hingegen sperren und daher die ersten MOSFETs (6, 7) im Substrat-Diodenbetrieb arbeiten können.

2. Synchrongleichrichter, bestehend aus einem Transformator (3) mit einer Primärwicklung (2), welche über einen von einem Oszillator gesteuerten Schalter (4) aus einer Gleichspannungsquelle (1) alternierend mit Strom versorgt wird, welcher Transformator (3) eine erste Sekundärwicklung (5) mit Enden (C, D) aufweist, ferner bestehend aus einem ersten MOSFET (6) und einem zweiten MOSFET (7), welche alternierend im Takte des Oszillators eingeschaltet werden, wobei der eine MOSFET (7) die Funktion einer Gleichrichterdiode, der zweite MOSFET (6) diejenige einer Freilaufdiode erfüllt, die Drain-Elektrode des ersten MOSFETs (6) einerseits mit dem einen Ende (C) der ersten Sekundärwicklung (5), anderseits über eine Speicherdrossel (12) mit einem Ausgang (14) der Vorrichtung verbunden ist, die Drain-Elektrode des zweiten MOSFETs (7) das andere Ende (D) der ersten Sekundärwicklung (5) speist, die Source-Elektroden beider MOSFETs (6, 7) mit einer Leitung (11) und über diese mit dem anderen Ausgang (15) der Vorrichtung verbunden sind, und die beiden Ausgänge (14, 15) der Vorrichtung durch einen Speicher- und Glättungskondensator (13) verbunden sind, dadurch gekennzeichnet, dass
- der Transformator (3) eine zweite Sekundärwicklung (16) mit Enden (E, F) aufweist, wobei das eine Ende (E) die gleiche Polarität aufweist, wie das eine Ende (C) der ersten Sekundärwicklung (5),
- eine Steuerung (17) vorhanden ist, welche sieben Anschlüsse (21 bis 27) aufweist, wobei der erste Anschluss (21) mit dem einen Ende (E), der zweite Anschluss (22) mit dem anderen Ende (F) der zweiten Sekundärwicklung (16), der dritte Anschluss (23) mit dem einen Ende (C), der vierte Anschluss (24) mit dem anderen Ende (D) der ersten Sekundärwicklung (5) verbunden sind, der fünfte Anschluss (25) an die Leitung (11), der sechste Anschluss (26) an die Gate-Elektrode des ersten MOSFETs (6), und der siebte Anschluss (27) an die Gate-Elektrode des zweiten MOSFETs (7) angeschlossen sind,
- die Steuerung (17) Mittel enthält zur Feststellung, ob über der ersten und der zweiten Sekundärwicklung (5, 16) eine Spannung induziert wird, und damit, ob der Synchrongleichrichter überhaupt arbeitet, ferner Mittel enthält, um im verneinenden Falle die beiden MOSFETs (6, 7) zu sperren, worauf diese ihre Diodenfunktion über ihre Substratdioden weiterhin vornehmen können,
- die in der Steuerung (17) vorhandenen Mittel zur Feststellung einer Induktionsspannung über der ersten und der zweiten Sekundärwicklung (5, 16) bestehen aus
- einer in Serie zu einem fünften Widerstande (42) geschalteten zweiten Diode (41), welche Serieschaltung mit dem dritten Anschluss (23) verbunden ist und von diesem, wenn er positive Polarität aufweist, von Strom durchflossen ist, und den anderseitig mit dem fünften Anschluss (25) verbundenen Kondensator (33) auflädt,
- aus dem einen weiteren MOSFET (36), dessen Source-Elektrode mit dem sechsten Anschluss (26) und dem anderen weiteren MOSFET (37), dessen Source-Elektrode mit dem siebten Anschluss (27) verbunden ist,
- dem dritten Widerstande (35), welcher den fünften und den sechsten Anschluss (25, 26) verbindet, und dem vierten Widerstande (34), welcher den fünften und den siebten Anschluss (25, 27) verbindet,
- einer Zener-Diode (43), deren Kathode an der Drain-Elektrode des ersten weiteren MOSFETs (36) liegt und deren Anode mit dem vierten Anschluss (24) verbunden ist,
- einer galvanischen Verbindung zwischen den Gate-Elektroden der zwei weiteren MOSFETs (36, 37) und dem positiven Anschluss des Kondensators (33),
- einer galvanischen Verbindung der Gate-Elektrode des anderen weiteren MOSFETs (37) und dem ersten Anschluss (21) und einer solchen zwischen dem ersten und dem fünften Anschluss (21, 25), wobei der Kondensator (33) über die zweite Diode (41) und den fünften Widerstand (42) immer dann positiv aufgeladen wird, wenn die Spannungen U_{CD} und U_{EF} über den zwei Sekundärwicklungen (5, 16) positiv sind,
- die Mittel zum Sperren der ersten MOSFETs (6, 7) ebenfalls aus den bereits genannten bestehen, wobei beim Ausfall der Induktionsspannungen U_{CD} und U_{EF} über den zwei Sekundärwicklungen (6, 15) die Gate-Elektroden der anderen zwei MOSFETs (36, 37) und den Kondensator (33) über die Substrat-Dioden der eben genannten MOSFETs (36, 37) entladen werden, diese MOSFETs (36, 37) damit sperren und die ersten MOSFETs (6, 7) dadurch in den Diodenbetrieb übergehen können.

## Claims

1. A synchronous rectifier, comprising a transformer (3) with a primary winding (2) which is supplied in an alternating manner with current from a direct current source (1) via a switch (4) which is controlled by an oscillator, which transformer (3) has a first secondary winding (5) with ends (C, D), additionally comprising a first MOSFET (6) and a second MOSFET (7), which are connected in an alternating manner in the cycle of the oscillator, in which the one MOSFET (7) fulfills the function of a rectifier diode, the second MOSFET (6) that of a free-running diode, the drain electrode of the first MOSFET (6) on the one hand is connected to the one end (C) of the first secondary winding (5), on the other hand via a storage impedance (12) to an output (14) of the device, the drain electrode of the second MOSFET (7) supplies the other end (D) of the first secondary winding (5), the source electrodes of both MOSFETs (6, 7) are connected to a line (11) and via this with the other output (15) of the device, and the two outputs (14, 15) of the device are connected by a storage- and smoothing condenser (13), characterised in that
- the transformer (3) has a second secondary winding (16) with ends (E, F), in which the one end (E) has the same polarity as the one end (C) of the first secondary winding (5),
- a control (17) is present, which has seven connections (21 to 27), in which the first connection (21) is connected to the one end (E), the second connection (22) to the other end (F) of the second secondary winding (16), the third connection (23) to the one end (C), the fourth connection (24) with the other end (D) of the first secondary winding (5), the fifth connection (25) is connected to the line (11), the sixth connection (26) to the gate electrode of the first MOSFET (6), and the seventh connection (27) to the gate electrode of the second MOSFET (7),
- the control (17) contains means to establish whether a voltage is induced via the first and the second secondary winding (5, 16), and hence whether the synchronous rectifier is operating at all, in addition contains means in order to block the two MOSFETs (6, 7) in the negative case, whereupon these can continue to perform their diode function via their substrate diodes,
- the means contained in the control (17) for establishing an induction voltage via the first and the second secondary winding (5, 16) comprising a first resistance (30) connected with the first connection (21), which resistance (30) is connected via a diode (31) and a second resistance (32) parallel to a condenser (33) to the fifth connection (25), which is also connected to the second connection (22), in which the voltage via the condenser (33) is the quantity to be established,
- the means for blocking the two MOSFETs (6, 7), comprising two further MOSFETs (36, 37), the gate electrodes of which are connected to the connection point between the diode (31) and the second resistance (32), the drain electrode of the one further MOSFET (36) is connected to the fourth connection (24), the drain electrode of the other further MOSFET (37) to the third connection (23), the source electrode of the one futher MOSFET (36) on the one hand is applied via a third resistance (35) to the fifth connection (25), on the other hand directly to the sixth connection (26), the source electrode of the second further MOSFET (37) on the one hand is applied via a fourth resistance (34) likewise to the fifth connection (25), on the other hand directly to the seventh connection (27),
- in which with induction voltage present via the second secondary winding (16), the gate electrodes of the two further MOSFETs (36, 37) are constantly positive in that each of the two further MOSFETs (36, 37) is conducting with correct drain source voltage, and the two first MOSFETs (6, 7) can operate in the correct cycle, however in the absence of the said induction voltage of the two second MOSFETs (36, 37) blocking occurs and therefore the first MOSFETs (6, 7) can operate in the substrate diode operation.

2. A synchronous rectifier, comprising a transformer (3) with a primary winding (2) which is supplied with current in an alternating manner from a direct voltage source (1) via a switch (4) which is controlled by an oscillator, which transformer (3) has a first secondary winding (5) with ends (C, D), in addition comprising a first MOSFET (6) and a second MOSFET (7) which are connected in an alternating manner in the cycle of the oscillator, in which the one MOSFET (7) fulfills the function of a rectifier diode, the second MOSFET (6) fulfills that of a free-running diode, the drain electrode of the first MOSFET (6) is connected on the one hand to the one end (C) of the first secondary winding (5), on the other hand is connected via a storage impedance (12) to an output (14) of the device, the drain electrode of the second MOSFET (7) supplies the other end (D) of the first secondary winding (5), the source electrodes of both MOSFETs (6, 7) are connected with a line (11) and via the latter with the other output (15) of the device, and the two outputs (14, 15) of the device are connected by a storage-and smoothing condenser (13), characterised in that
- the transformer (3) has a second secondary winding (16) with ends (E, F), in which the one end (E) has the same polarity as the one end (C) of the first secondary winding (5),
- a control arrangement (17) is present, which has seven connections (21 to 27), in which the first connection (21) is connected to the one end (E), the second connection (22) to the other end (F) of the second secondary winding (16), the third connection (23) to the one end (C), the fourth connection (24) to the other end (D) of the first secondary winding (5), the fifth connection (25) is connected to the line (11), the sixth connection (26) to the gate electrode of the first MOSFET (6), and the seventh connection (27) to the gate electrode of the second MOSFET (7),
- the control arrangement (17) contains means to establish whether via the first and the second secondary winding (5, 16) a voltage is induced and hence whether the synchronous rectifier is operating at all, in addition contains means to block the two MOSFETs (6, 7) in the negative case, whereupon these can continue to perform their diode function via their substrate diodes,
- the means, present in the control arrangement (17), to establish an induction voltage via the first and the second secondary winding (5, 16) comprise:
- a second diode (41) connected in series to a fifth resistance (42), which series connection is connected to the third connection (23) and from this, if it has positive polarity, has current flowing through it, and charges the condenser (33) connected on the other side to the fifth connection (25),
- the one further MOSFET (36), the source electrode of which is connected with the sixth connection (26) and the other further MOSFET (37), the source electrode of which is connected with the seventh connection (27),
- the third resistance (35) which connects the fifth and the sixth connection (25, 26), and the fourth resistance (34) which connects the fifth and the seventh connection (25, 27),
- a break-down diode (43), the cathode of which is applied to the drain electrode of the first further MOSFET (36) and the anode of which is connected to the fourth connection (24),
- a galvanic connection between the gate electrodes of the two further MOSFETs (36, 37) and the positive connection of the condenser (33),
- a galvanic connection of the gate electrode of the other further MOSFET (37) and the first connection (21) and such a connection between the first and the fifth connection (21, 25), in which the condenser (33) via the second diode (41) and the fifth resistance (42) is always positively charged when the voltages U_{CD} and U_{EF} are positive via the two secondary windings (5, 16),
- the means for blocking the first MOSFETs (6, 7) likewise comprise those already mentioned, in which on failure of the induction voltages U_{CD} and U_{EF} via the two secondary windings (6, 15) the gate electrodes of the other two MOSFETs (36, 37) and the condenser (33) are discharged via the substrate diodes of the said MOSFETs (36, 37), these MOSFETs (36, 37) therefore block and the first MOSFETs (6, 7) can thereby transfer into the diode operation.

## Revendications

1. Redresseur de courant synchrone formé d'un transformateur (3) comportant un enroulement primaire (2) qui est alimenté en courant en alternance à partir d'une source de tension continue (1), par l'intermédiaire d'un interrupteur (4) commandé par un oscillateur, et un premier enroulement secondaire (5) présentant des extrémités (C, D), d'un premier transistor MOSFET (6) et d'un second transistor MOSFET (7) qui sont mis en circuit en alternance au rythme de l'oscillateur, étant précisé qu'un transistor MOSFET (7) remplit la fonction d'une diode de redressement et l'autre transistor MOSFET (6) celle d'une diode de roue libre, que l'électrode de drain du premier transistor MOSFET (6) est reliée d'un côté à une extrémité (C) du premier enroulement secondaire (5) et de l'autre côté, par l'intermédiaire d'une bobine de choc accumulatrice (12), à une sortie (14) du dispositif, que l'électrode de drain du second transistor MOSFET (7) alimente l'autre extrémité (D) du premier enroulement secondaire (5), que les électrodes de source des deux transistors MOSFET (6, 7) sont reliées à une ligne (11) et, par l'intermédiaire de celle-ci, à l'autre sortie (15) du dispositif, et enfin que les deux sorties (14, 15) du dispositif sont reliées par un condensateur d'accumulation et de lissage (13), caractérisé
- en ce que le transformateur (3) comporte un second enroulement secondaire (16) pourvu d'extrémités (E, F), une première extrémité (E) présentant la même polarité que la première extrémité (C) du premier enroulement secondaire (5),
- en ce qu'il est prévu une commande (17) qui comporte sept raccordements (21 à 27), le premier raccordement (21) étant relié à la première extrémité (E), le deuxième (22) à la seconde extrémité (F) du second enroulement secondaire (16), le troisième (23) à la première extrémité (C), le quatrième (24) à la seconde extrémité (D) du premier enroulement secondaire (5), le cinquième (25) à la ligne (11), le sixième (26) à l'électrode de grille du premier transistor MOSFET (6) et le septième (27) à l'électrode de grille du second transistor MOSFET (7),
- en ce que la commande (17) contient des moyens pour déterminer si une tension est induite par l'intermédiaire du premier et du second enroulement secondaire (5, 16) et donc si le redresseur de courant synchrone fonctionne, et contient aussi des moyens pour bloquer dans le cas contraire les deux transistors MOSFET (6, 7), après quoi ceux-ci peuvent continuer à assurer leur fonction de diodes par l'intermédiaire de leurs diodes de substrats,
- en ce que les moyens contenus dans la commande (17) pour déterminer une tension induite par l'intermédiaire du premier et du second enroulement secondaire (5, 16) se composent d'un première résistance (30), reliée au premier raccordement (21), qui est raccordée au cinquième raccordement (25), parallèlement à un condensateur (33), par l'intermédiaire d'une diode (31) et d'une seconde résistance (32), et qui est aussi reliée au deuxième raccordement (22), la tension au niveau du condensateur (33) étant la grandeur à déterminer,
- en ce que les moyens pour bloquer les deux transistors MOSFET (6, 7) se composent de deux transistors MOSFET supplémentaires (36, 37) dont les électrodes de grille sont reliées au point de raccordement entre la diode (31) et la seconde résistance (32), l'électrode de drain d'un premier transistor MOSFET supplémentaire (36) est reliée au quatrième raccordement (24) et l'électrode de drain d'un second transistor MOSFET supplémentaire (37) est reliée au troisième raccordement (23), l'électrode de source du premier transistor MOSFET supplémentaire (36) est reliée d'un côté au cinquième raccordement (25), par l'intermédiaire d'une troisième résistance (35), et de l'autre côté directement au sixième raccordement (26), tandis que l'électrode de source du second transistor MOSFET supplémentaire (37) est reliée d'un côté au cinquième raccordement (25), elle aussi, par l'intermédiaire d'une quatrième résistance (34), et de l'autre côté directement au septième raccordement (27),
- étant précisé qu'en présence d'une tension induite par l'intermédiaire du second enroulement secondaire (16), les électrodes de grille des deux transistors MOSFET supplémentaires (36, 37) sont en permanence positives de sorte que chacun des deux transistors MOSFET supplémentaires (36, 37) est conducteur avec la bonne tension drain-source et que les deux premiers transistors MOSFET (6, 7) peuvent fonctionner au bon rythme, alors qu'en l'absence de cette tension d'induction, au contraire, les deux seconds transistors MOSFET (36, 37) se bloquent et les premiers transistors MOSFET (6, 7) peuvent donc fonctionner en régime substrat-diode.

2. Redresseur de courant synchrone formé d'un transformateur (3) comportant un enroulement primaire (2) qui est alimenté en courant en alternance à partir d'une source de tension continue (1), par l'intermédiaire d'un interrupteur (4) commandé par un oscillateur, et un premier enroulement secondaire (5) présentant des extrémités (C, D), d'un premier transistor MOSFET (6) et d'un second transistor MOSFET (7) qui sont mis en circuit en alternance au rythme de l'oscillateur, étant précisé qu'un transistor MOSFET (7) remplit la fonction d'une diode de redressement et l'autre transistor MOSFET (6) celle d'une diode de roue libre, que l'électrode de drain du premier transistor MOSFET (6) est reliée d'un côté à une extrémité (C) du premier enroulement secondaire (5) et de l'autre côté, par l'intermédiaire d'une bobine de choc accumulatrice (12), à une sortie (14) du dispositif, que l'électrode de drain du second transistor MOSFET (7) alimente l'autre extrémité (D) du premier enroulement secondaire (5), que l'électrode de source des deux transistors MOSFET (6, 7) est reliée à une ligne (11) et, par l'intermédiaire de celle-ci, à l'autre sortie (15) du dispositif, et enfin que les deux sorties (14, 15) du dispositif sont reliées par un condensateur d'accumulation et de lissage (13), caractérisé
- en ce que le transformateur (3) comporte un second enroulement secondaire (16) pourvu d'extrémités (E, F), une première extrémité (E) présentant la même polarité que la première extrémité (C) du premier enroulement secondaire (5),
- en ce qu'il est prévu une commande (17) qui comporte sept raccordements (21 à 27), le premier raccordement (21) étant relié à la première extrémité (E), le deuxième (22) à la seconde extrémité (F) du second enroulement secondaire (16), le troisième (23) à la première extrémité (C), le quatrième (24) à la seconde extrémité (D) du premier enroulement secondaire (5), le cinquième (25) à la ligne (11), le sixième (26) à l'électrode de grille du premier transistor MOSFET (6) et le septième (27) à l'électrode de grille du second transistor MOSFET (7),
- en ce que la commande (17) contient des moyens pour déterminer si une tension est induite par l'intermédiaire du premier et du second enroulement secondaire (5, 16) et donc si le redresseur de courant synchrone fonctionne, et contient aussi des moyens pour bloquer dans le cas contraire les deux transistors MOSFET (6, 7), après quoi ceux-ci peuvent continuer à assurer leur fonction de diodes par l'intermédiaire de leurs diodes de substrats,
- en ce que les moyens contenus dans la commande (17) pour déterminer une tension induite par l'intermédiaire du premier et du second enroulement secondaire (5, 16) comprennent
- une seconde diode (41) montée en série par rapport à une cinquième résistance (42), étant précisé que ce montage en série est relié au troisième raccordement (23), est traversé par du courant lorsque celui-ci présente une polarité positive, et charge le condensateur (33) relié de l'autre côté au cinquième raccordement (25),
- le premier transistor MOSFET supplémentaire (36), dont l'électrode de source est reliée au sixième raccordement (26), et le second MOSFET supplémentaire (37), dont l'électrode de source est reliée au septième raccordement (27),
- la troisième résistance (35) qui relie le cinquième et le sixième raccordement (25, 26), et la quatrième résistance (34) qui relie le cinquième et le septième raccordement (25, 27),
- une diode Zener (43) dont la cathode se trouve au niveau de l'électrode de drain du premier transistor MOSFET supplémentaire (36) et dont l'anode est reliée au quatrième raccordement (24),
- une liaison galvanique entre les électrodes de grille des deux transistors MOSFET supplémentaires (36, 37) et le raccordement positif du condensateur (33),
- une liaison galvanique entre l'électrode de grille du second transistor MOSFET supplémentaire (37) et le premier raccordement (21), et une liaison galvanique entre le premier et le cinquième raccordement (21, 25), étant précisé que le condensateur (33) est toujours chargé positivement par l'intermédiaire de la seconde diode (41) et de la cinquième résistance (42) lorsque les tensions U_{CD} et U_{EF} au niveau des deux enroulements secondaires (5, 16) sont positives,
- et en ce que les moyens pour bloquer les premiers transistors MOSFET (6, 7) comprennent les moyens déjà cités, étant précisé qu'en cas de défaillance des tensions d'induction U_{CD} et U_{EF} au niveau des deux enroulements secondaires (6, 15), les électrodes de grille des deux autres transistors MOSFET (36, 37) et le condensateur (33) sont déchargés par l'intermédiaire des diodes de substrats desdits transistors MOSFET (36, 37), ces derniers se bloquent donc et les premiers transistors MOSFET (6, 7) peuvent ainsi passer en régime diode.
